(19)

Europäisches Patentamt

European Patent Office

Office européen des brevets

(11) **EP 4 304 071 A1**

(12) **EUROPÄISCHE PATENTANMELDUNG**

(43) Veröffentlichungstag:
   **10.01.2024  Patentblatt 2024/02**

(21) Anmeldenummer: **22183346.0**

(22) Anmeldetag: **06.07.2022**

(51) Internationale Patentklassifikation (IPC):
   *H02M 7/48* (2007.01)    *H02M 5/458* (2006.01)
   *H02M 1/00* (2006.01)

(52) Gemeinsame Patentklassifikation (CPC):
   **H02M 7/48; H02M 1/0012; H02M 1/0016;**
   **H02M 5/458; H02M 5/4585**

(84) Benannte Vertragsstaaten:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Benannte Erstreckungsstaaten:
   **BA ME**
   Benannte Validierungsstaaten:
   **KH MA MD TN**

(71) Anmelder: **Siemens Aktiengesellschaft**
   **80333 München (DE)**

(72) Erfinder: **Lahlou, Taha**
   **91052 Erlangen (DE)**

(74) Vertreter: **Siemens Patent Attorneys**
   **Postfach 22 16 34**
   **80506 München (DE)**

(54) **VERFAHREN ZUM BETREIBEN EINES NETZGEKOPPELTEN WECHSELRICHTERS, WECHSELRICHTER, COMPUTERPROGRAMM UND COMPUTERLESBARES MEDIUM**

(57)    Verfahren zum Betreiben eines netzgekoppelten Wechselrichters, Wechselrichter, Computerprogramm und computerlesbares Medium

Die Erfindung betrifft ein Verfahren zum Betreiben eines netzgekoppelten Wechselrichters (1), der mit einer elektrischen Maschine (3) verbundenen ist, bei dem im generatorischen Betrieb des Wechselrichters (1) wenigstens ein Leistungsschalter (4) des Wechselrichters (1) bei einem Zündwinkel $\alpha_{zü}$ eingeschaltet wird, für den gilt

$$\alpha_{zü} = 180° - \alpha_{ab} + \alpha_{c\_ab},$$

wobei $\alpha_{ab}$ derjenige Winkel ist, bei dem der Netzstrom ($i_{mot}$) im motorischen Betrieb des Wechselrichters (1) innerhalb einer Halbperiode letztmalig auf Null abfällt, und wobei $\alpha_{c\_ab}$ ein konstanter Winkel ist,
und wobei der wenigstens eine Leistungsschalter (4) des Wechselrichters (1) bei einem Löschwinkel $\alpha_{lö}$ ausgeschaltet wird, für den gilt

$$\alpha_{lö} = 180° - \alpha_{an} + \alpha_{c\_an},$$

wobei $\alpha_{an}$ derjenige Winkel ist, an dem der Netzstrom ($i_{mot}$) im motorischen Betrieb des Wechselrichters (1) vor dem Abfall auf Null bei dem Winkel $\alpha_{ab}$ das letzte Mal von Null ausgehend ansteigt, und wobei $\alpha_{c\_an}$ ein konstanter Winkel ist.

FIG 5

**Beschreibung**

Die Erfindung betrifft ein Verfahren zum Betreiben eines netzgekoppelten Wechselrichters, der mit einer elektrischen Maschine verbunden ist. Darüber hinaus betrifft die Erfindung einen Wechselrichter, ein Computerprogramm und ein computerlesbares Medium.

Wechselrichter, die auch als Inverter bezeichnet werden, dienen der Umwandlung von Gleichspannung in Wechselspannung. An das öffentliche Niederspannungs-Versorgungsnetz angeschlossene Wechselrichter müssen verschiedene Anforderungen erfüllen. In diesem Zusammenhang spielt die Norm DIN EN 61000:2011 "Elektromagnetische Verträglichkeit (EMV)" eine Rolle. In DIN EN 61000-3-12:2011 (Teil 3-12: Grenzwerte - Grenzwerte für Oberschwingungsströme, verursacht von Geräten und Einrichtungen mit einem Eingangsstrom > 16 A und ≤ 75 A je Leiter, die zum Anschluss an öffentliche Niederspannungsnetze vorgesehen sind (IEC 61000-3-12:2011) sind Grenzen für den THC (englische Abkürzung für: Total Harmonic Content/Current) und den PWHC (englische Abkürzung für: Partial Weighted Harmonic Content/Current) angegeben.

Es besteht die Problematik, dass Wechselrichter diese Anforderungen teilweise nicht erfüllen, beispielsweise nicht in allen Betriebsmodi. Insbesondere kann das Problem bestehen, dass die Anforderungen an THC und PWHC zwar in einem motorischen, nicht jedoch in einem generatorischen Betrieb erfüllt werden. Dies insbesondere, weil der Strom im generatorischen Betrieb eine Blockform aufweist, da das Schaltmuster (englisch: switching pattern) des Wechselrichters zu der Netzspannung synchron ist.

Beim motorischen Betrieb fließt Strom vom mit dem Wechselrichter verbundenen Netz durch den Wechselrichter zu einer ebenfalls mit dem Wechselrichter verbundenen elektrischen Maschine, insbesondere einem verbundenen Motor, und im generatorischen Betrieb in umgekehrter Richtung, also von der elektrischen Maschine durch den Wechselrichter zum Netz.

Die Problematik, dass die Anforderungen an THC und PWHC im generatorischen Betrieb nicht erfüllt werden, bestehen beispielsweise für netzgekoppelte Wechselrichter mit einer Topologie mit einem mit der fundamentalen Frequenz (in Deutschland 50 Hz) geschalteten 2-Level Gleichrichter in Kombination mit Netzdrossel und insbesondere großem Gleichspannungszwischenkreis. Unter groß ist dabei zu verstehen, dass die Größe ausreichend ist, damit die Spannung konstant gehalten werden kann.

Der Anmelderin ist eine Vorgehensweise bekannt, um der vorgenannten Problematik zu begegnen. Dabei beginnt der Wechselrichter vor der Kommutierung der Netzspannungen zu schalten, um die Stromabnahmegeschwindigkeit zu verringern und so die Resonanzen im Netz aufgrund der hohen Stromgeschwindigkeit zu reduzieren.

Auch wenn sich diese Vorgehensweise prinzipiell bewährt hat, besteht weiterhin Bedarf an geeigneten Lösungen.

Es ist daher eine Aufgabe der vorliegenden Erfindung, ein Verfahren zum Betreiben eines Wechselrichters anzugeben, welches einen optimierten generatorischen Betrieb ermöglicht.

Diese Aufgabe wird gelöst durch ein Verfahren zum Betreiben eines netzgekoppelten Wechselrichters, der mit einer elektrischen Maschine verbunden ist, bei dem

im generatorischen Betrieb des Wechselrichters wenigstens ein Leistungsschalter des Wechselrichters bei einem Zündwinkel $\alpha_{z\ddot{u}}$ eingeschaltet wird, für den gilt

$$\alpha_{z\ddot{u}} = 180° - \alpha_{ab} + \alpha_{c\_ab},$$

wobei $\alpha_{ab}$ derjenige Winkel ist, bei dem der Netzstrom im motorischen Betrieb des Wechselrichters innerhalb einer Halbperiode letztmalig auf Null abfällt, und wobei $\alpha_{c\_ab}$ ein konstanter Winkel ist, der insbesondere zwischen 0° und +/- 2°, bevorzugt zwischen 0° und +/-1° liegt, und wobei der wenigstens eine Leistungsschalter des Wechselrichters bei einem Löschwinkel $\alpha_{l\ddot{o}}$ ausgeschaltet wird, für den gilt

$$\alpha_{l\ddot{o}} = 180° - \alpha_{an} + \alpha_{c\_an},$$

wobei $\alpha_{an}$ derjenige Winkel ist, an dem der Netzstrom im motorischen Betrieb des Wechselrichters vor dem Abfall auf Null bei dem Winkel $\alpha_{ab}$ das letzte Mal von Null ausgehend ansteigt, und wobei $\alpha_{c\_an}$ ein konstanter Winkel ist, der insbesondere zwischen 0° und +/- 2°, bevorzugt zwischen 0° und +/-1° liegt.

Die vorliegende Erfindung basiert mit anderen Worten auf der Erkenntnis, dass im generatorischen Betrieb eine zu der Form, insbesondere Wellenform, des Stromes im motorischen Betrieb gespiegelte Form erhalten werden kann. Erfindungsgemäß wird hierfür bzw. werden hierfür die Leistungsschalter im generatorischen Betrieb zu definierten - vom motorischen Betrieb abhängigen - Zeiten ein- und ausgeschaltet. Dabei wird darauf abgestellt, wann der Netzstrom im motorischen Betrieb beginnt anzusteigen bzw. abzufallen. Die Winkel, an denen ein Abfall auf Null bzw. ein von Null ausgehender Anstieg des Stromes vorliegt, werden genutzt, um einen optimierten, netzfreundlichen generatorischen Betrieb zu erzielen. Dabei erfolgt eine Invertierung der Winkel aus dem motorischen Betrieb, indem diese von 180° subtrahiert werden. Dies wird auch als Spiegelung um eine halbe Periode bezeichnet.

Zweckmäßiger Weise wird noch ein konstanter (positiver oder negativer) Winkelwert hinzuaddiert, um die Genauigkeit zu verbessern. Dies insbesondere, da im motorischen Betrieb über der bzw. den Dioden des Wechselrichters ein Spannungsabfall vorliegt, während dies im generativen Betrieb für den bzw. die Leistungsschalter nicht gilt. In bevorzugter Ausführungsform des erfindungsgemäßen Verfahrens ist entsprechend vorgesehen, dass der Winkel $\alpha_{c\_ab}$ geeignet ist, einen im motorischen Betrieb des Wechselrichters über wenigstens einer Diode des Wechselrichters vorliegenden Spannungsabfall zu kompensieren, und/oder dass der Winkel $\alpha_{c\_an}$ geeignet ist, einen im motorischen Betrieb des Wechselrichters über wenigstens einer Diode des Wechselrichters vorliegenden Spannungsabfall zu kompensieren. Die konstanten Winkel sind in der Regel klein mit einem Betrag im einstelligen Bereich, liegen insbesondere zwischen 0° und +/- 2°, bevorzugt zwischen 0° und +/- 1°.

In weiterer bevorzugter Ausgestaltung gilt, dass sich $\alpha_{c\_ab}$ und $\alpha_{c\_an}$ betragsmäßig und/oder hinsichtlich ihres Vorzeichens voneinander unterscheiden. Mit anderen Worten wird zum Erhalt des (jeweiligen) Zündwinkels für ein Einschalten im generativen Betrieb bevorzugt ein anderer (positiver bzw. negativer) konstanter Wert hinzuaddiert als für den Erhalt eines Löschwinkels für das Abschalten. In besonders bevorzugter Ausgestaltung weist $\alpha_{c\_ab}$ ein negatives und $\alpha_{c\_an}$ ein positives Vorzeichen auf. Mit anderen Worten wird $\alpha_{c\_ab}$ subtrahiert und $\alpha_{c\_an}$ addiert.

Die Werte für $\alpha_{c\_ab}$ und $\alpha_{c\_an}$ können in Abhängigkeit der konstruktiven Ausgestaltung des Wechselrichters und insbesondere einer gesamten, dieser umfassenden Anlage gewählt bzw. ermittelt werden. Für die konstanten Korrekturwinkel gilt zweckmäßiger Weise, dass sie für alle Betriebspunkte gleich sind, sich also nicht ändern.

Die aus der Invertierung und zweckmäßigen Addition des konstanten Winkels resultierenden Winkelwerte werden erfindungsgemäß als Zünd- bzw. Löschwinkel für den generativen Betrieb genutzt. Unter einem Zündwinkel bzw. einem Löschwinkel ist dabei ein Winkel zu verstehen, an dem der bzw. der jeweilige Leistungsschalter eingeschaltet bzw. ausgeschaltet wird. Es sei angemerkt, dass anstelle des Begriffs "Zündwinkel" prinzipiell auch der Begriff "Vorzündwinkel" verwendet werden kann, da das Einschalten vor der "Zündung", hier dem Anstieg des Stromes, liegt, und in analoger Weise für den "Löschwinkel" auch die Bezeichnung "Vorlöschwinkel", da das Ausschalten vor dem "Löschen", hier dem Abfall des Stromes auf Null, liegt. Vorliegend werden jedoch die kurzen Bezeichnungen "Zündwinkel" und "Löschwinkel" verwendet.

Bei der elektrischen Maschine kann es sich z.B. um einen Motor handeln. Als weitere Beispiele für elektrische Maschinen seien Batterien, Brennstoffzellen bzw. beliebige DC-Stromquellen oder -senken oder ein anderes leistungselektronisches System, etwa ein anderer AC-DC-Wechselrichter oder DC-DC-Converter. Es sei betont, dass diese Aufzählung nicht abschließend zu verstehen ist.

Weiterhin sei angemerkt, dass ein Winkel grundsätzlich zu einer Zeit korrespondiert, da mit der Frequenz die Periodenlänge bekannt ist. In Deutschland beispielsweise liegt die Frequenz des öffentlichen Stromnetzes bei 50 Hz und eine Periodendauer, die 360° entspricht, beträgt 20 Millisekunden.

Erfindungsgemäß wird auf den Winkel des Abfalls auf Null am Ende des Stromverlaufes im motorischen Betrieb (wenn eine Halbperiode von 180° betrachtet wird) abgestellt, um den (ersten) Zündwinkel für den generatorischen Betrieb zu erhalten.

Dabei ist zu beachten, dass insbesondere im lückenlosen Betrieb des Wechselrichters (englisch: continuous operation) der Netzstrom im motorischen Betrieb innerhalb einer Halbperiode von 180° üblicher Weise genau ein Mal von Null ausgehend ansteigt und danach genau ein Mal wieder auf Null abfällt. Für den generatorischen Betrieb ergeben sich durch erfindungsgemäße Spiegelung dann genau ein Zündwinkel und genau ein Löschwinkel, wobei der Löschwinkel zu dem gespiegelten Winkel des Anstiegs am Anfang korrespondieret.

Im lückenden Betrieb hingegen treten üblicher Weise nicht nur ein Anstieg von Null und ein Abfall auf Null auf, sondern mindestens zwei Anstiege und mindestens zwei Abfälle.

In vorteilhafter Weiterbildung des erfindungsgemäßen Verfahrens ist daher vorgesehen, dass insbesondere in einem lückenden Betrieb des Wechselrichters der wenigstens eine Leistungsschalter nach dem Einschalten bei dem Zündwinkel $\alpha_{zü}$ und dem Ausschalten bei dem Löschwinkel $\alpha_{lö}$ noch ein weiteres Mal bei einem zweiten Zündwinkel $\alpha_{zü2}$ eingeschaltet und danach noch ein weiteres Mal bei einem zweiten Löschwinkel $\alpha_{lö2}$ ausgeschaltet wird, wobei für den zweiten Zündwinkel $\alpha_{zü2}$ gilt

$$\alpha_{zü2} = 180° - \alpha_{ab2} + \alpha_{c2\_ab},$$

wobei $\alpha_{ab2}$ derjenige Winkel ist, bei dem der Netzstrom im motorischen Betrieb des Wechselrichters vor dem von Null ausgehenden Anstieg bei dem Winkel $\alpha_{an}$ das letzte Mal auf Null abfällt, und wobei $\alpha_{c2\_ab}$ ein konstanter Winkel ist, der insbesondere zwischen 0° und +/- 2°, bevorzugt zwischen 0° und +/-1° liegt,
und wobei für den zweiten Löschwinkel $\alpha_{lö2}$ gilt

$$\alpha_{lö2} = 180° - \alpha_{an2} + \alpha_{c2\_an},$$

wobei $\alpha_{an2}$ derjenige Winkel ist, bei dem der Netzstrom im motorischen Betrieb des Wechselrichters vor dem Abfall auf Null bei dem Winkel $\alpha_{ab2}$ das letzte Mal von Null ausgehend ansteigt, und wobei $\alpha_{c2\_an}$ ein konstanter Winkel ist, der insbesondere zwischen 0° und +/- 2°, bevorzugt zwischen 0° und +/-1° liegt.

Insbesondere im lückenden Betrieb wird also bevorzugt bei vier Winkeln $\alpha_{zü}$, $\alpha_{lö}$, $\alpha_{zü2}$ und $\alpha_{lö2}$ ein- bzw. ausgeschaltet.

Mit anderen Worten werden ein weiterer Anstieg und ein weiterer Abfall aus dem motorischen Betrieb zusätzlich berücksichtigt. Insgesamt werden insbesondere die Winkel des letzten Abfalls auf Null, des letzten Anstiegs von Null, des vorletzten Abfalls auf Null und des vorletzten Anstiegs von Null im motorischen Betrieb berücksichtigt und - in dieser Reihenfolge - für das erste Einschalten, das erste Ausschalten, das zweite Einschalten und das zweite Ausschalten im generatorischen Betrieb herangezogen, jeweils invertiert und zweckmäßiger Weise um den konstanten Winkelwert ergänzt.

Es sei angemerkt, dass sich $\alpha_{c2\_ab}$ und $\alpha_{c2\_an}$ bevorzugt voneinander unterscheiden und zwar betragsmäßig und/oder bezüglich ihrer Vorzeichen. $\alpha_{c2\_ab}$ stimmt bevorzugt mit $\alpha_{c\_ab}$ überein und/oder $\alpha_{c2\_an}$ stimmt bevorzugt mit $\alpha_{c\_an}$ überein. Es ist aber auch nicht ausgeschlossen, dass $\alpha_{c2\_ab}$ nicht mit $\alpha_{c\_ab}$ und/oder $\alpha_{c2\_an}$ nicht mit $\alpha_{c\_an}$ übereinstimmt. In weiterer besonders bevorzugter Ausgestaltung weist $\alpha_{c2\_ab}$ ein negatives und $\alpha_{c2\_an}$ ein positives Vorzeichen auf.

Vor allem in einem Übergangsbereich zwischen lückenlosem und lückendem Betrieb kann der Strom im motorischen Betrieb auch mehr als zwei Mal von Null ansteigen und mehr als zwei Mal auf Null abfallen, insbesondere drei Mal ansteigen und drei Mal abfallen. In diesem Falle können weitere, frühere Stromanstiege von Null bzw. Stromabfälle auf Null (in der Halbperiode) im motorischen Betrieb vernachlässigt werden, im Falle des dreimaligen Ansteigens und Abfallens entsprechend der allererste Stromanstieg und der der allererste Stromabfall (in der Halbperiode) im motorischen Betrieb. Entsprechend können auch in diesem Fall nur die Winkel des letzten Abfallens auf Null, des letzten Ansteigens von Null, des vorletzten Abfallens auf Null und des vorletzten Ansteigens von Null im motorischen Betrieb betrachtet und - in dieser Reihenfolge - für ein erstes Einschalten, erstes Ausschalten, zweites Einschalten und zweites Ausschalten im generatorischen Betrieb herangezogen, also jeweils invertiert und zweckmäßiger Weise um den konstanten Korrekturwinkelwert korrigiert werden.

Es ist aber auch nicht ausgeschlossen, dass weitere, frühere Stromanstiege von Null bzw. Stromabfälle auf Null (in der Halbperiode) im motorischen Betrieb berücksichtigt und hieraus weitere Zündwinkel $\alpha_{züi}$ und Löschwinkel $\alpha_{löi}$ (mit i = 3, 4, ...) für den generatorischen Betrieb ermittelt und somit bei mehr als vier Zünd-/Löschwinkeln ein- und ausgeschaltet wird. Im Falle des dreimaligen Ansteigens und Abfallens entsprechend ein dritter Zündwinkel $\alpha_{zü3}$ und dritter Löschwinkel $\alpha_{lö3}$. Hier kann dann jeweils völlig analog vorgegangen werden, wie zum Erhalt der ersten und zweiten Zünd- und Löschwinkels. Zugehörige Korrekturwinkel $\alpha_{ci\_ab}$ und $\alpha_{ci\_an}$ (mit i = 3, 4, ...) liegen ebenfalls insbesondere zwischen 0° und +/-2°, bevorzugt zwischen 0° und +/- 1°.

Es versteht sich, dass der Wechselrichter als mehrphasiger Wechselrichter mit mehreren Leistungsschaltern ausgebildet sein kann. Dann gilt zweckmäßiger Weise, dass ein Leistungsschalter bei dem Zündwinkel $\alpha_{zü}$ eingeschaltet und bei dem Löschwinkel $\alpha_{lö}$ ausgeschaltet und optional bei dem zweiten Zündwinkel $\alpha_{zü2}$ und gegebenenfalls noch weiteren Zündwinkeln eingeschaltet und bei dem zweiten Löschwinkel $\alpha_{lö2}$ und gegebenenfalls noch weiteren Löschwinkeln ausgeschaltet wird, und wenigstens ein weiterer Leistungsschalter bei gegenüber diesen Winkeln um einen vorgegebenen Verschiebungswert verschobenen Zünd- und Löschwinkeln ein- und ausgeschaltet wird. Rein beispielhaft sei genannt, dass ein Wechselrichter dreiphasig ist und mindestens drei Leistungsschalter umfasst. Dann kann ein erster Leistungsschalter (1. Phase) beispiels-weise zu den Zünd- bzw. Löschwinkeln $\alpha_{zü}$ und $\alpha_{lö}$ und optional $\alpha_{zü2}$ und $\alpha_{lö2}$ (und ggf. weiteren Zünd- und Löschwinkeln) ein- bzw. ausgeschaltet werden, ein zweiter Schalter (2. Phase) beispielsweise zu den Zünd- bzw. Löschwinkeln $\alpha_{zü}$ - 120° (oder + 240°) und $\alpha_{lö}$ - 120° (oder + 240°) und optional $\alpha_{zü2}$ + 120° (oder + 240°) und $\alpha_{lö2}$ + 120° (oder + 240°) ein- bzw. ausgeschaltet werden, und ein dritter Schalter (3. Phase) beispielsweise zu den Zünd- bzw. Löschwinkeln $\alpha_{zü}$ + 240° (oder - 120°) und $\alpha_{lö}$ + 240° (oder - 120°) und optional $\alpha_{zü2}$ + 240° (oder - 120°) und $\alpha_{lö2}$ + 240° (oder - 120°) ein- bzw. ausgeschaltet werden.

Die Winkel $\alpha_{ab}$ und $\alpha_{an}$ und optional die Winkel $\alpha_{ab2}$ und $\alpha_{an2}$ und ggf. weitere Zünd- und Löschwinkel werden zweckmäßiger Weise ermittelt. Hier stehen prinzipiell verschiedene Möglichkeiten zur Verfügung.

Es kann vorgesehen sein, dass der motorische Betrieb des Wechselrichters simuliert wird, insbesondere unter Nutzung eines physikalischen Simulationsmodells, und die Winkel $\alpha_{ab}$ und $\alpha_{an}$ und optional die Winkel $\alpha_{ab2}$ und $\alpha_{an2}$

mittels der Simulation, insbesondere aus einem Simulationsergebnis, ermittelt werden. Bevorzugt kommt ein Simulationsmodell zum Einsatz, welches den Antriebsstrang, also den Wechselrichter und die verbundene elektrische Maschine, insbesondere einen verbundenen Motor, abbildet bzw. repräsentiert. Bei dieser Ausführungsform liefert mit anderen Worten eine Simulation des motorischen Betriebes die Definition der Winkel für den generatorischen Betrieb. Die Simulation kann beispielsweise den Stromverlauf des motorischen Betriebes ausgeben, aus dem dann die Winkel $\alpha_{ab}$, $\alpha_{an}$ und optional $\alpha_{ab2}$ und $\alpha_{an2}$ ermittelt bzw. entnommen werden können. Kommt eine Simulation zum Einsatz, kann diese auch die anschließende Invertierung und ggf. das Addieren eines konstanten Winkels umsetzen, so dass als Ausgabe Zünd- und Löschwinkel für den generatorischen Betrieb erhalten werden. Eine entsprechende Simulation bzw. Analyse kann vor der Inbetriebnahme, auch für verschiedene Netzparameter, durchgeführt werden. Verschiedene Netzparameter können insbesondere durch Standards gegeben sein, die der Wechselrichter zu erfüllen hat.

Alternativ oder zusätzlich ist es möglich, die Winkel $\alpha_{ab}$ und $\alpha_{an}$ und optional die Winkel $\alpha_{ab2}$ und $\alpha_{an2}$ auf Basis von Messergebnissen ermittelt werden, die im regulären Betrieb des Wechselrichters aufgenommen werden oder wurden. Mit anderen Worten wird der Wechselrichter - zumindest vorübergehend - auf konventionelle Weise betrieben, um den Stromverlauf im motorischen Betrieb zu erhalten und auf Basis dieses auf erfindungsgemäße Weise die Zünd- und Löschwinkel für den generatorischen Betrieb ermitteln zu können.

Eine weitere Ausführungsform zeichnet sich ferner dadurch aus, dass die Winkel $\alpha_{ab}$ und $\alpha_{an}$ und optional die Winkel $\alpha_{ab2}$ und $\alpha_{an2}$ auf Basis von Messergebnissen ermittelt werden, die während einer Inbetriebnahme des Wechselrichters, wenn dieser an das Stromnetz angeschlossen ist, aber die elektrische Maschine noch nicht betrieben wird, aufgenommen werden oder wurden. Dies insbesondere, wenn der netzverbundene Wechselrichter bei der Inbetriebnahme im motorischen Betrieb läuft und den Zwischenkreis kurz im generatorischen Betrieb lädt, ohne die Zwischenkreisspannung stark zur reduzieren.

Das erfindungsgemäße Verfahren kann für Wechselrichter beliebiger Art genutzt werden, auch für bestehende, konventionelle Wechselrichter. Beispielsweise können erfindungsgemäß erhaltene Zünd- und Löschwinkel in einem bestehenden, konventionellen Wechselrichter eingestellt werden, dies z.B., nachdem sie unter Durchführung einer geeigneten Simulation erhalten wurden. Rein beispielhaft sein genannt, dass die ermittelten Zünd- und Löschwinkel in die Software eines vorhandenen, ggf. auch konventionellen Wechselrichters eingespielt werden.

Gegenstand der Erfindung ist auch ein Wechselrichter, umfassend

- einen Prozessor, und
- eine Datenspeichervorrichtung, auf der computerausführbarer Programmcode gespeichert ist, der, wenn er von dem Prozessor ausgeführt wird, diesen veranlasst, die Schritte des erfindungsgemäßen Verfahrens durchzuführen.

Ein entsprechend ausgestatteter Wechselrichter ist zur Durchführung des erfindungsgemäßen Verfahrens geeignet.

Der erfindungsgemäße Wechselrichter bzw. ein Wechselrichter, der auf die erfindungsgemäße Weise betreiben wird, umfasst zweckmäßiger Weise eine Netzdrossel und einen Zwischenkreis.

Ein weiterer Gegenstand der vorliegenden Erfindung ist ein Computerprogramm, das Programmcodemittel umfasst, die, wenn sie auf wenigstens einem Computer ausgeführt werden, den wenigstens einen Computer veranlassen, die Schritte des erfindungsgemäßen Verfahrens durchzuführen.

Die Erfindung betrifft auch ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispiels-weise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist

FIG 1    eine rein schematische Darstellung eines netzgekoppelten sowie mit einer elektrischen Maschine verbundenen Wechselrichters,

FIG 2    einen Graphen, der u.a. Spannungen und Strom für den Fall des motorischen Betriebes des Wechselrichters aus FIG 1 zeigt,

FIG 3    einen Graphen, der u.a. Spannungen und Strom für den Fall des generatorischen Betriebes des Wechselrichters aus FIG 1 zeigt,

FIG 4    ein Harmonischenspektrum des Netzstromes des Wechselrichters aus FIG 1,

FIG 5    einen Graphen, der u.a. Spannungen und Strom für den motorischen und generatorischen Betrieb des Wechselrichters nach Durchführung eines Ausführungsbeispiels des erfindungsgemäßen Verfahrens zeigt (unterhalb des nominalen Stromes, lückenloser Betrieb)

FIG 6 einen Graphen, der u.a. Spannungen und Strom für den motorischen und generatorischen Betrieb des Wechselrichters nach Durchführung eines Ausführungsbeispiels des erfindungsgemäßen Verfahrens zeigt (nominaler Strom, lückenloser Betrieb),

FIG 7 einen Graphen, der u.a. Spannungen und Strom für den motorischen und generatorischen Betrieb des Wechselrichters nach Durchführung eines Ausführungsbeispiels des erfindungsgemäßen Verfahrens zeigt (unterhalb des nominalen Stromes, lückender Betrieb), und

FIG 8 einen Graphen, der u.a. Spannungen und Strom für den motorischen und generatorischen Betrieb des Wechselrichters bei nach Durchführung eines Ausführungsbeispiels des erfindungsgemäßen Verfahrens zeigt (unterhalb des nominalen Stromes, lückender Betrieb).

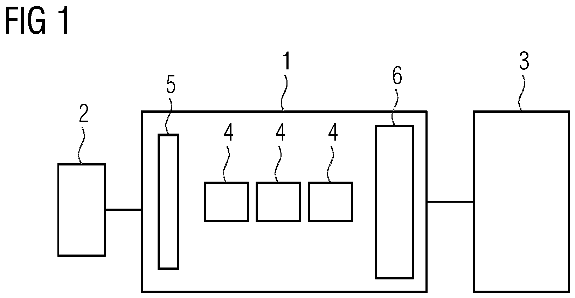

Die FIG 1 zeigt in rein schematischer Darstellung einen Wechselrichter 1, der mit dem öffentlichen Stromnetz 2 sowie einer elektrischen Maschine 3 in Form eines Motors verbunden ist. Bei dem hier dargestellten Beispiel umfasst der Motor 3 seinerseits einen Wechselrichter, der in der stark vereinfachten FIG 1 nicht dargestellt ist.

Bei der elektrischen Maschine kann es sich alternativ zu dem Motor 3 beispielsweise auch um eine Batterie, Brennstoffzelle bzw. andere beliebige DC-Stromquellen oder -senken oder ein anderes leistungselektronisches System, etwa einen anderen AC-DC-Wechselrichter oder DC-DC-Converter handeln.

Der Wechselrichter 1 ist mehrphasig mit mehreren Leistungsschaltern 4 ausgebildet. Er weist ferner eine Netzdrossel 5 und einen Zwischenkreis 6 auf. Die Netzdrossel 5 dient insbesondere dem Unterdrücken von Harmonischen. Sie begrenzt den Stromanstieg und kann somit weniger Störungen im Netzstrom ermöglichen. Es sei angemerkt, dass in der stark vereinfachten FIG 1 die interne Verschaltung des Wechselrichters 1 und die mehrphasige Verbindung mit dem öffentlichen Netz 2 nicht dargestellt sind. Weiterhin sei angemerkt, dass der hier dreiphasige Wechselrichter 1 neben den in FIG 1 eingezeichneten drei Leistungsschaltern 4 noch drei weitere Leistungsschalter 4 aufweisen kann bzw. aufweist, die abwechselnd mit - mit anderen Worten negiert zu - den drei in der Figur gezeigten Leistungsschaltern 4 betätigt bzw. geschaltet werden. Je ein Paar von zwei negiert betriebenen Leistungsschaltern 4 bildet in vorbekannter Weise eine Halbbrücke. Die drei weiteren Leistungsschalter 4 sind in der FIG 1 aus Gründen der Übersichtlichkeit nicht zusätzlich dargestellt.

Es kann sich bei dem Wechselrichter 1 beispielsweise um einen SIEMENS Inverter RGD (Regenerative Drive) oder SLM (Smart Mode) handeln, wobei dies rein beispielhaft zu verstehen ist.

In der DIN EN 61000-3-12:2011 sind Grenzen für den THC und den PWHC angegeben, die der Wechselrichter 1 zwar im motorischen Betrieb erfüllt, nicht jedoch im generatorischen Betrieb. Beim motorischen Betrieb fließt Strom vom Netz 2 durch den Wechselrichter 1 zum Motor 3 und beim generatorischen in umgekehrter Richtung, also vom Motor 3 durch den Wechselrichter 1 zum Netz 2.

Im generatorischen Betrieb weist der Strom eine Blockform auf, da das Schaltmuster (englisch: switching pattern) des Wechselrichters 1 zu der Netzspannung synchron ist.

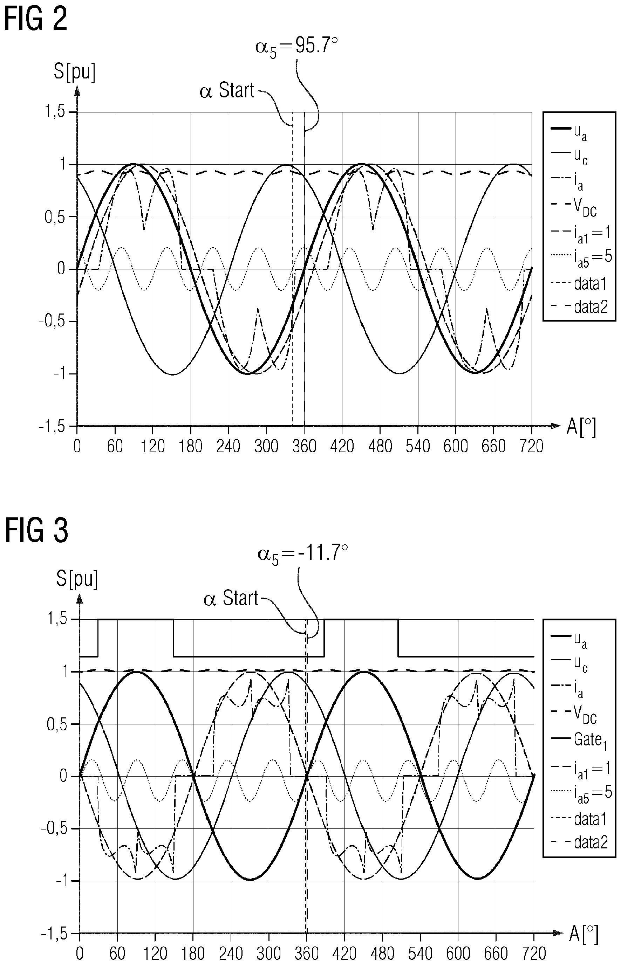

Der Betrieb des Wechselrichters 1 im motorischen Modus ist in der FIG 2 und im generatorischen Modus in FIG 3 dargestellt.

Bei den in den Graphen über dem Winkel in Grad dargestellten und in den zugehörigen Legenden aufgeführten Größen handelt es sich um:

| | |
|---|---|
| $u_a$ | Netzspannung in Phase a |
| $u_c$ | Netzspannung in Phase c |
| $i_a$ | Netzstrom von Phase a |
| $i_{a1}$ | Grundwelle des Stromes von Phase a |
| $i_{a5}$ | 5. Harmonische des Stromes von Phase a |
| $V_{DC}$ | Zwischenkreisspannung |
| data1 | Linie, die den Nullpunkt markiert |
| data2 | Linie, die den Winkel zwischen der Netzspannung und der 5. Harmonischen des Netzstromes von Phase a markiert |
| $Gate_1$ | Steuersignal eines Leistungsschalters 4 |

In der folgenden Tabelle sind beispielhaft berechnete THC und PWHC für den motorischen Betrieb mit den Grenzen gemäß DIN EN 61000-3-12 gegenübergestellt:

| | Berechnet | DIN EN 61000-3-12 |
|---|---|---|
| THC | 35,4 % | 48 % |

(fortgesetzt)

|  | Berechnet | DIN EN 61000-3-12 |
|---|---|---|
| PWHC | 16,5 % | 46 % |

Wie man erkennt, sind die Anforderungen an THC und PWHC der DIN EN 61000-3-12 für den motorischen Betrieb erfüllt.

Wie man der FIG 3 entnehmen kann, ist die Stromform ($i_a$) im generatorischen Betrieb ein Block und enthält hohe di(t)/dt ($di_a$ (t) /dt) .

In der folgenden Tabelle sind beispielhaft berechnete THC und PWHC für den generatorischen Betrieb mit den Grenzen gemäß DIN EN 61000-3-12 gegenübergestellt:

|  | Berechnet | DIN EN 61000-3-12 |
|---|---|---|
| THC | 30,0 % | 48 % |
| PWHC | 59,4 % | 46 % |

Wie man erkannt, ist die Grenze von 46 % für den PWHC mit 59,4 % überschritten.

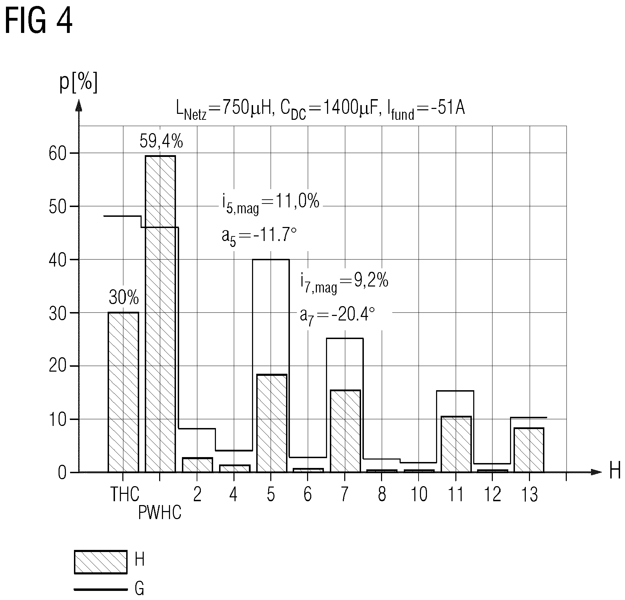

Die FIG 4 zeigt ein zugehöriges Harmonischenspektrum, wobei auch die Grenzen gemäß DIN EN 61000-3-12 eingezeichnet sind. In der Legende steht H für Harmonische und G für die entsprechenden Grenzen gemäß dieser Norm.

Das vorgenannte Problem der Überschreitung der PWHC Grenze im generatorischen Betrieb des Wechselrichters 1 kann dadurch gelöst werden, dass im generatorischen Betrieb des Wechselrichters 1 wenigstens ein Leistungsschalter 4 des Wechselrichters 1, vorliegend der in FIG 4 linke Leistungsschalter 4, bei einem Zündwinkel $\alpha_{zü}$ eingeschaltet wird, für den gilt

$$\alpha_{zü} = 180° - \alpha_{ab} + \alpha_{c\_ab},$$

wobei $\alpha_{ab}$ derjenige Winkel ist, bei dem der Netzstrom im motorischen Betrieb des Wechselrichters 1 innerhalb einer Halbperiode letztmalig auf Null abfällt, und wobei $\alpha_{c\_ab}$ ein konstanter Winkel ist, der bevorzugt zwischen 0° und 1° liegt, und wobei der Leistungsschalter 4 des Wechselrichters 1 bei einem Löschwinkel $\alpha_{lö}$ ausgeschaltet wird, für den gilt

$$\alpha_{lö} = 180° - \alpha_{an} + \alpha_{c\_an},$$

wobei $\alpha_{an}$ derjenige Winkel ist, an dem der Netzstrom im motorischen Betrieb des Wechselrichters 1 vor dem Abfall auf Null bei dem Winkel $\alpha_{ab}$ das letzte Mal von Null ausgehend ansteigt, und wobei $\alpha_{c\_an}$ ein konstanter Winkel ist, der bevorzugt zwischen 0° und 1° liegt.

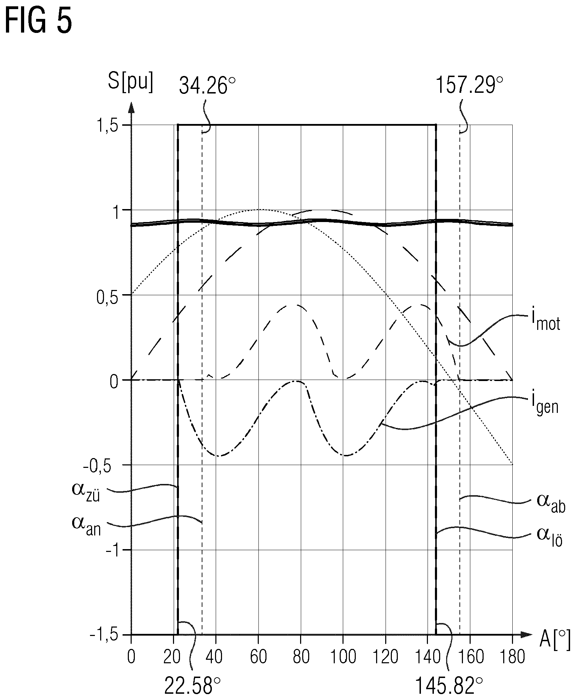

Dies ist in der FIG 5 beispielhaft näher veranschaulicht. Diese zeigt u.a. den Verlauf des Netzstromes $i_{mot}$ für den Fall des motorischen Betriebes und den Verlauf des Netzstromes $i_{gen}$ für den Fall des generatorischen Betriebes, der durch entsprechende Schaltung des linken Leistungsschalters 4 des Wechselrichters 1 erzielt wird. In dem Graphen ist jeweils das Signal (abgekürzt mit S) in pu über dem Winkel (abgekürzt mit A) in Grad aufgetragen.

In FIG 5 eingezeichnet sind die vorgenannten Winkel $\alpha_{ab}$, $\alpha_{an}$, $\alpha_{zü}$ und $\alpha_{lö}$. Die konstanten Winkel betragen hier

$$\alpha_{c\_ab} = -0,13°$$

und

$$\alpha_{c\_an} = 0,08°.$$

Diese werden hinzuaddiert, um die Genauigkeit zu erhöhen. Dies, da im motorischen Betrieb über der bzw. den Dioden des Wechselrichters 1 ein Spannungsabfall vorliegt, während dies im generativen Betrieb für den bzw. die Leistungsschalter 4 nicht gilt. Aufgrund des hier negativen Wertes von $\alpha_{c\_ab}$ ergibt sich, dass der Wert abgezogen, also subtrahiert wird.

Wie man der FIG 5 entnehmen kann, gilt bei dem gezeigten Beispiel, dass der Netzstrom $i_{mot}$ im motorischen Betrieb bei folgendem Winkel auf Null abfällt:

$$\alpha_{ab} = 157{,}29°.$$

Er steigt ferner bei folgendem Winkel von Null an:

$$\alpha_{an} = 34{,}26°.$$

Zusammen mit den beiden konstanten Winkeln $\alpha_{c\_ab}$ und $\alpha_{c\_an}$ erhält man:

$$\alpha_{zü} = 180° - \alpha_{ab} + \alpha_{c\_ab} = 180° - 157{,}29° - 0{,}13° = 22{,}58°$$

$$\alpha_{lö} = 180° - \alpha_{an} + \alpha_{c\_an} = 180° - 34{,}26° + 0{,}08° = 145{,}82°$$

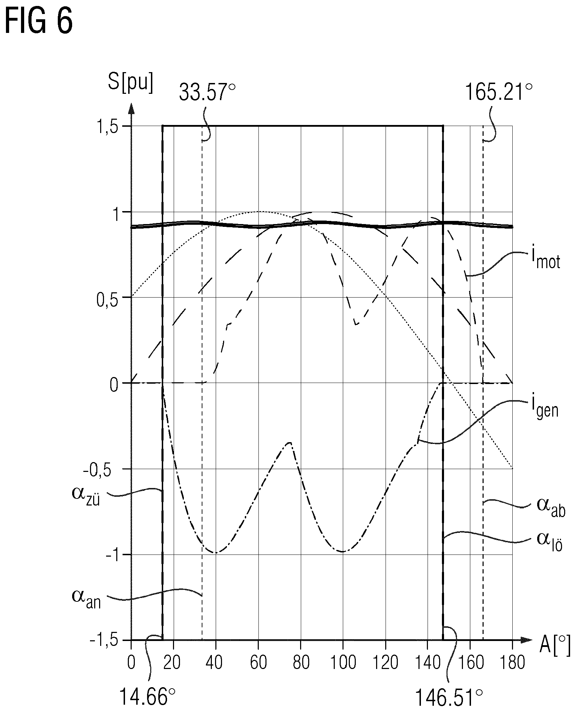

Die FIG 6 zeigt, völlig analog zu FIG 5, den Verlauf des Netzstromes $i_{mot}$ für den Fall des motorischen Betriebes und den Verlauf des Netzstromes $i_{ge}$ für den Fall des generatorischen Betriebes, hier für nominalen Strom, also 100 %.

Hier gilt für den Zünd- und Löschwinkel für den generatorischen Betrieb in Abhängigkeit der Winkel $\alpha_{ab}$ und $\alpha_{an}$ des motorischen Modus:

$$\alpha_{zü} = 180° - \alpha_{ab} + \alpha_{c\_ab} = 180° - 165{,}21° - 0{,}13° = 14{,}66°$$

$$\alpha_{lö} = 180° - \alpha_{an} + \alpha_{c\_an} = 180° - 33{,}57° + 0{,}08° = 146{,}51°$$

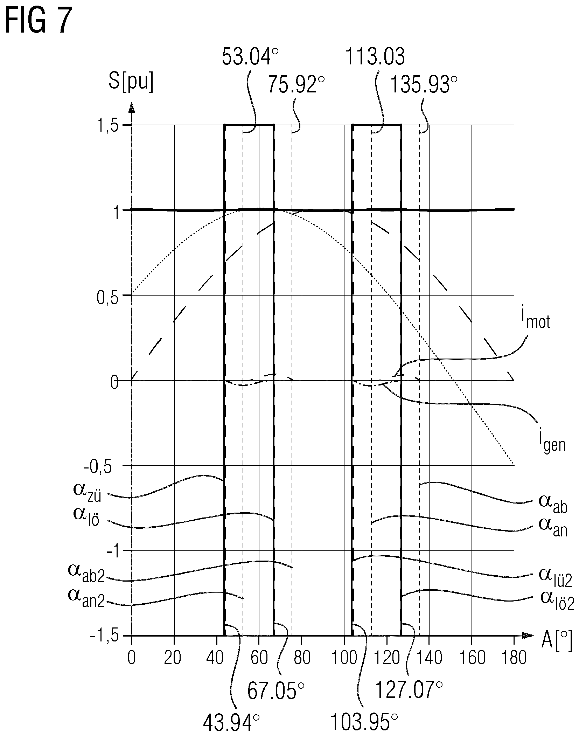

Unterhalb eines bestimmten Anteils des nominalen Stromes geht der Wechselrichter 1 vom lückenlosen in den lückenden Betrieb über. Im lückenden Betrieb treten üblicher Weise nicht nur ein Anstieg des Stromes von Null und ein Abfall des Stromes auf Null auf (vgl. Figuren 5 und 6 und Winkel $\alpha_{ab}$ und $\alpha_{an}$ darin mit entsprechendem Stromanstieg/Stromabfall), sondern mindestens zwei Anstiege und mindestens zwei Abfälle (vgl. FIG 7 und die Winkel $\alpha_{ab}$ und $\alpha_{an}$ sowie $\alpha_{ab2}$ und $\alpha_{an2}$ darin mit entsprechendem Stromanstieg/Stromabfall).

Im lückenden Betrieb des Wechselrichters 1 wird der Leistungsschalter 4 daher nach dem Einschalten bei einem Zündwinkel $\alpha_{zü}$ und dem Ausschalten bei einem Löschwinkel $\alpha_{lö}$ noch ein weiteres Mal bei einem zweiten Zündwinkel $\alpha_{zü2}$ eingeschaltet und danach noch ein weiteres Mal bei einem zweiten Löschwinkel $\alpha_{lö2}$ ausgeschaltet. Dabei gilt für den zweiten Zündwinkel:

$$\alpha_{zü2} = 180° - \alpha_{ab2} + \alpha_{c2\_ab},$$

wobei $\alpha_{ab2}$ derjenige Winkel ist, bei dem der Netzstrom im motorischen Betrieb des Wechselrichters vor dem von Null ausgehenden Anstieg bei dem Winkel $\alpha_{an}$ das letzte Mal auf Null abfällt, und wobei $\alpha_{c2\_ab}$ ein konstanter Winkel ist, der bevorzugt zwischen 0° und +/-1° liegt.

Für den zweiten Löschwinkel gilt dann ferner:

$$\alpha_{lö2} = 180° - \alpha_{an2} + \alpha_{c2\_an},$$

wobei $\alpha_{an2}$ derjenige Winkel ist, bei dem der Netzstrom im motorischen Betrieb des Wechselrichters vor dem Abfall auf Null bei dem Winkel $\alpha_{ab2}$ das letzte Mal von Null ausgehend ansteigt, und wobei $\alpha_{c2\_an}$ ein konstanter Winkel ist, der bevorzugt zwischen 0° und +/-1° liegt.

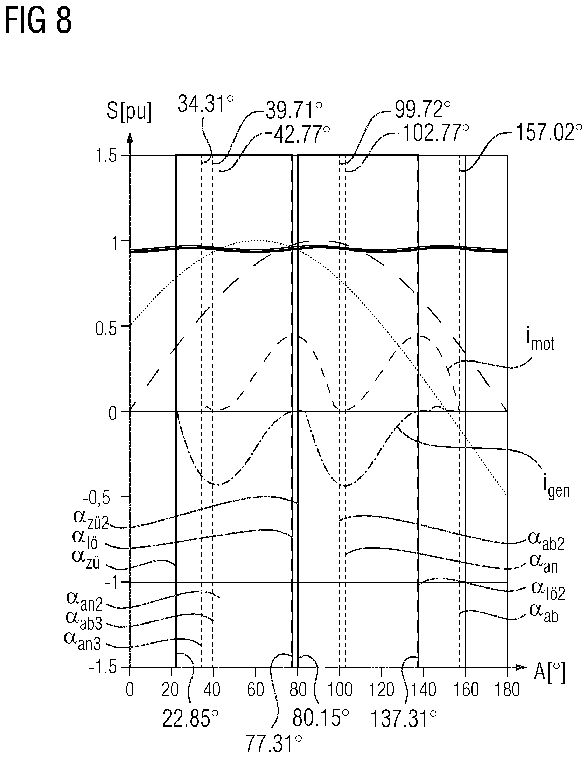

Mit anderen Worten wird im lückenden Betrieb bevorzugt bei vier Winkeln $\alpha_{zü}$, $\alpha_{lö}$, $\alpha_{zü2}$ und $\alpha_{lö2}$ ein- bzw. ausgeschaltet. Beispiele für den lückenden Betrieb sind in den Figuren 7 und 8 veranschaulicht.

Es gilt für die konstanten Winkel

$$\alpha_{c\_ab} = -0,13$$

$$\alpha_{c\_an} = +0,08$$

$$\alpha_{c2\_ab} = -0,13$$

$$\alpha_{c2\_an} = +0,08$$

Wie man erkennt, stimmen $\alpha_{c\_ab}$ und $\alpha_{c2\_ab}$ sowie $\alpha_{c\_an}$ und $\alpha_{c2\_an}$ überein.

Für die Zünd- und Löschwinkel in FIG 7 gilt:

$$\alpha_{zü} = 180° - \alpha_{ab} + \alpha_{c\_ab} = 180° - 135,93° - 0,13° = 43,94$$

$$\alpha_{lö} = 180° - \alpha_{an} + \alpha_{c\_an} = 180° - 113,03° + 0,08° = 67,05°$$

$$\alpha_{zü2} = 180° - \alpha_{ab2} + \alpha_{c2\_ab} = 180° - 75,92° - 0,13° = 103,95°$$

$$\alpha_{lö2} = 180° - \alpha_{an2} + \alpha_{c2\_an} = 180° - 53,04 + 0,08° = 127,04°$$

Für die Zünd- und Löschwinkel in FIG 8 gilt:

$$\alpha_{zü} = 180° - \alpha_{ab} + \alpha_{c\_ab} = 180° - 157,02° - 0,13° = 22,85°$$

$$\alpha_{lö} = 180° - \alpha_{an} + \alpha_{c\_an} = 180° - 102,77° + 0,08° = 77,31°$$

$$\alpha_{zü2} = 180° - \alpha_{ab2} + \alpha_{c2\_ab} = 180° - 99,72° - 0,13° = 80,15°$$

$$\alpha_{lö2} = 180° - \alpha_{an2} + \alpha_{c2\_an} = 180° - 42,77° + 0,08° = 137,31°$$

Es sei angemerkt, dass vor allem in einem Übergangsbereich zwischen lückenlosem und lückendem Betrieb der Strom auch mehr als zwei Mal von Null ansteigen und mehr als zwei Mal auf Null abfallen kann, insbesondere drei Mal ansteigen und drei Mal abfallen kann (vgl. FIG 8 und die Winkel $\alpha_{ab}$ und $\alpha_{an}$ sowie $\alpha_{ab2}$ und $\alpha_{an2}$ sowie $\alpha_{ab3}$ und $\alpha_{an3}$ darin mit entsprechendem Stromanstieg/Stromabfall). In diesem Falle können der erste Stromanstieg (bei Winkel $\alpha_{an3}$) und der der erste Stromabfall (bei Winkel $\alpha_{ab3}$) in der Halbperiode im motorischen Betrieb vernachlässigt werden. Dies ist jedoch nicht zwingend der Fall. Es ist auch möglich, zu dem ersten Anstieg von Null und ersten anschließenden Abfall auf Null korrespondierende gespiegelte und um konstante Korrekturwinkel korrigierte Zünd- und Löschwinkel für den generatorischen Betrieb zu ermitteln, wobei dann völlig analog vorgegangen werden kann, wie zuvor für die ersten und zweiten Zünd- und Löschwinkel $\alpha_{zü}$, $\alpha_{lö}$, $\alpha_{zü2}$, $\alpha_{lö2}$ beschrieben. Mit anderen Worten würden als dritter Zünd- und dritter Löschwinkel ermittelt werden: $\alpha_{zü3} = 180° - \alpha_{ab3} + \alpha_{c3\_ab}$ und $\alpha_{lö3} = 180° - \alpha_{an3} + \alpha_{c3\_an}$. Der konstante Korrekturwinkel $\alpha_{c3\_ab}$ würde dabei bevorzugt mit $\alpha_{c\_ab}$ und $\alpha_{c2\_ab}$ übereinstimmen und der konstante Korrekturwinkel $\alpha_{c3\_an}$ bevorzugt mit $\alpha_{c\_an}$ und $\alpha_{c2\_an}$. Für etwaige weitere Zünd- und Löschwinkel ($\alpha_{züi}$ und $\alpha_{löi}$ mit i = 4, 5, ...) kann prinzipiell analog vorgegangen werden.

Die ermittelten Zünd- und Löschwinkel $\alpha_{zü}$ und $\alpha_{lö}$ sowie optional $\alpha_{zü2}$ und $\alpha_{lö2}$ (sowie gegebenenfalls weitere Zünd- und Löschwinkel) können dann beispielsweise in die Software eines vorhandenen, ggf. auch konventionellen Wechselrichters 1 eingespielt werden, um diesen entsprechend zu betreiben.

Wie man in den Figuren 5 bis 8 erkennt, wird durch die Spiegelung der Winkel von Stromanstieg(en) und Stromabstieg(en) aus dem motorischen Betrieb und das vorstehend beschriebene entsprechende Ein- und Ausschalten des Leistungsschalters 4 im generatorischen Betrieb eine zu der Form, insbesondere Wellenform, des Stromes im motorischen Betrieb gespiegelte Form erhalten. Da im motorischen betrieb die Anforderungen an THC und PWHC eingehalten werden, gilt dies für den generatorischen Betrieb mit nunmehr gespiegeltem Stromverlauf ebenfalls.

Es sei betont, dass die weiteren Leistungsschalter 4 des mehrphasigen Wechselrichters, also der in FIG 1 mittlere sowie rechte Leistungsschalter 4, zweckmäßiger Weise entsprechend phasenverschoben zu dem linken Leistungsschalter 4 ein- und ausgeschaltet werden. Insbesondere gilt für die Zünd- und Löschwinkel $\alpha_{zü}$, $\alpha_{lö}$, $\alpha_{zü2}$, $\alpha_{lö2}$ des mittleren Leistungsschalters 4, dass sie den vorstehend berechneten Winkeln - 120° (oder + 240°) entsprechen. Für den in FIG 1 rechten Leistungsschalter 4 werden zweckmäßiger Weise jeweils 240° subtrahiert (oder + 120°). Dieses Prinzip ist aus dem Stand der Technik hinlänglich vorbekannt.

Die in den Figuren 5 bis 8 dargestellten Stromverläufe $i_{mot}$ des motorischen Betriebes des Wechselrichters 1, aus denen die Winkel $\alpha_{ab}$, $\alpha_{an}$, $\alpha_{ab2}$ und $\alpha_{an2}$ erhalten wurden, sind bei dem hier beschriebenen Beispiel durch eine Simulation des motorischen Betriebes des Wechselrichters 1 erhalten worden. Dabei kam ein Simulationsmodell zum Einsatz, welches den Antriebsstrang, also den Wechselrichter und die verbundene elektrische Maschine, insbesondere einen verbundenen Motor, abbildet bzw. repräsentiert. Ein solches Simulationsmodell besteht bevorzugt aus mehreren Teilmodellen, bei dem Beispiel gemäß FIG 1 insbesondere aus folgenden Teilmodellen: Netzmodell, Netzfilter-Modell, Netz-Wechselrichter-Modell, Zwischenkreismodell, Motor-Wechselrichter-Modell und Motor-Modell. Je nach Anlage werden die Modelle charakterisiert und dann kann die Simulation zum Erhalt der Winkel erfolgen.

Alternativ oder zusätzlich zu der Simulation können auch messtechnisch erfasste Daten herangezogen werden. Beispielsweise kann der Wechselrichters 1 zunächst zumindest für eine gewisse Zeit auf konventionelle Weise betrieben werden, also ohne Ein- und Ausschalten der Leistungsschalter auf die vorstehend beschriebene Weise zum Erhalt des gespiegelten motorischen Stromverlaufes im generativen Modus. Aus den Messdaten können dann die Winkel $\alpha_{ab}$, $\alpha_{an}$, $\alpha_{ab2}$ und $\alpha_{an2}$ abgelesen bzw. ermittelt werden und die Spiegelung erfolgen.

Es kann auch auf Messergebnisse zurückgegriffen werden, die während einer Inbetriebnahme des Wechselrichters 1, wenn dieser an das Stromnetz 2 angeschlossen ist, aber die elektrische Maschine 3 noch nicht betrieben wird, aufgenommen werden bzw. wurden. Dies insbesondere, wenn der netzverbundene Wechselrichter 1 bei der Inbetriebnahme im motorischen Betrieb läuft und den DC-Link kurz im generatorischen Betrieb lädt, ohne die DC-Link-Spannung hoch zu entladen.

Die vorstehend beschriebenen Schritte können mittels einer Software und unter Nutzung von geeigneter Hardware durchgeführt werden. Die Hardware, die zweckmäßiger Weise einen Prozessor und eine Datenspeichervorrichtung umfasst, kann Bestandteil des Wechselrichters 1 sein. Es kann sich aber auch um eine zu dem Wechselrichter 1 separate Hardware handeln. Wenn eine Simulation genutzt wird, um dem Stromverlauf $i_{mot}$ des motorischen Betriebs zu erhalten, kann die Simulation ebenfalls mittels der Software durchgeführt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Betreiben eines netzgekoppelten Wechselrichters (1), der mit einer elektrischen Maschine (3) verbundenen ist, bei dem

   im generatorischen Betrieb des Wechselrichters (1) wenigstens ein Leistungsschalter (4) des Wechselrichters (1) bei einem Zündwinkel $\alpha_{zü}$ eingeschaltet wird, für den gilt

$$\alpha_{z\ddot{u}} = 180° - \alpha_{ab} + \alpha_{c\_ab},$$

wobei $\alpha_{ab}$ derjenige Winkel ist, bei dem der Netzstrom ($i_{mot}$) im motorischen Betrieb des Wechselrichters (1) innerhalb einer Halbperiode letztmalig auf Null abfällt, und wobei $\alpha_{c\_ab}$ ein konstanter Winkel ist, der insbesondere zwischen 0° und +/-2°, bevorzugt zwischen 0° und +/-1° liegt,
und wobei der wenigstens eine Leistungsschalter (4) des Wechselrichters (1) bei einem Löschwinkel $\alpha_{l\ddot{o}}$ ausgeschaltet wird, für den gilt

$$\alpha_{l\ddot{o}} = 180° - \alpha_{an} + \alpha_{c\_an},$$

wobei $\alpha_{an}$ derjenige Winkel ist, an dem der Netzstrom ($i_{mot}$) im motorischen Betrieb des Wechselrichters (1) vor dem Abfall auf Null bei dem Winkel $\alpha_{ab}$ das letzte Mal von Null ausgehend ansteigt, und wobei $\alpha_{c\_an}$ ein konstanter Winkel ist, der insbesondere zwischen 0° und +/-2°, bevorzugt zwischen 0° und +/-1° liegt.

2. Verfahren nach Anspruch 1, **dadurch gekennzeichnet, dass** der Winkel $\alpha_{c\_ab}$ geeignet ist, einen im motorischen Betrieb des Wechselrichters (1) über wenigstens einer Diode des Wechselrichters (1) vorliegenden Spannungsabfall zu kompensieren, und/oder dass der Winkel $\alpha_{c\_an}$ geeignet ist, einen im motorischen Betrieb des Wechselrichters (1) über wenigstens einer Diode des Wechselrichters (1) vorliegenden Spannungsabfall zu kompensieren.

3. Verfahren nach Anspruch 1 oder 2, **dadurch gekennzeichnet, dass** sich $\alpha_{c\_ab}$ und $\alpha_{c\_an}$ betragsmäßig und/oder bezüglich ihres Vorzeichens voneinander unterscheiden.

4. Verfahren nach einem der vorhergehenden Ansprüche, **dadurch gekennzeichnet, dass** insbesondere in einem lückenden Betrieb des Wechselrichters (1) der wenigstens eine Leistungsschalter (4) nach dem Einschalten bei dem Zündwinkel $\alpha_{z\ddot{u}}$ und dem Ausschalten bei dem Löschwinkel $\alpha_{l\ddot{o}}$ noch ein weiteres Mal bei einem zweiten Zündwinkel $\alpha_{z\ddot{u}2}$ eingeschaltet und danach noch ein weiteres Mal bei einem zweiten Löschwinkel $\alpha_{l\ddot{o}2}$ ausgeschaltet wird, wobei für den zweiten Zündwinkel $\alpha_{z\ddot{u}2}$ gilt

$$\alpha_{z\ddot{u}2} = 180° - \alpha_{ab2} + \alpha_{c2\_ab},$$

wobei $\alpha_{ab2}$ derjenige Winkel ist, bei dem der Netzstrom ($i_{mot}$) im motorischen Betrieb des Wechselrichters (1) vor dem von Null ausgehenden Anstieg bei dem Winkel $\alpha_{an}$ das letzte Mal auf Null abfällt, und wobei $\alpha_{c2\_ab}$ ein konstanter Winkel ist, der insbesondere zwischen 0° und +/-2°, bevorzugt zwischen 0° und +/-1° liegt,
und wobei für den zweiten Löschwinkel $\alpha_{l\ddot{o}2}$ gilt

$$\alpha_{l\ddot{o}2} = 180° - \alpha_{an2} + \alpha_{c2\_an},$$

wobei $\alpha_{an2}$ derjenige Winkel ist, bei dem der Netzstrom ($i_{mot}$) im motorischen Betrieb des Wechselrichters (1) vor dem Abfall auf Null bei dem Winkel $\alpha_{ab2}$ das letzte Mal von Null ausgehend ansteigt, und wobei $\alpha_{c2\_an}$ ein konstanter Winkel ist, der insbesondere zwischen 0° und +/-2°, bevorzugt zwischen 0° und +/-1° liegt.

5. Verfahren nach Anspruch 4, **dadurch gekennzeichnet, dass** sich $\alpha_{c2\_ab}$ und $\alpha_{c2\_an}$ betragsmäßig und/oder bezüglich ihres Vorzeichens voneinander unterscheiden und/oder dass $\alpha_{c2\_ab}$ mit $\alpha_{c\_ab}$ übereinstimmt und $\alpha_{c2\_an}$ mit $\alpha_{c\_an}$ übereinstimmt.

6. Verfahren nach einem der vorhergehenden Ansprüche, **dadurch gekennzeichnet , dass** der Wechselrichter (1) als mehrphasiger Wechselrichter (1) mit mehreren Leistungsschaltern (4) ausgebildet ist und ein Leistungsschalter (4) bei dem Zündwinkel $\alpha_{z\ddot{u}}$ eingeschaltet und bei dem Löschwinkel $\alpha_{l\ddot{o}}$ ausgeschaltet und optional bei dem zweiten Zündwinkel $\alpha_{z\ddot{u}2}$ eingeschaltet und bei dem zweiten Löschwinkel $\alpha_{l\ddot{o}2}$ ausgeschaltet wird, und wenigstens ein weiterer Leistungsschalter (4) bei gegenüber diesen Winkeln um einen vorgegebenen Verschiebungswert verschobenen Zünd- und Löschwinkeln ein- und ausgeschaltet wird.

7. Verfahren nach einem der vorhergehenden Ansprüche, **dadurch gekennzeichnet, dass** die Winkel $\alpha_{ab}$ und $\alpha_{an}$ und optional die Winkel $\alpha_{ab2}$ und $\alpha_{an2}$ ermittelt werden.

8. Verfahren nach Anspruch 7, **dadurch gekennzeichnet, dass** der motorische Betrieb des Wechselrichters (1) simuliert wird, insbesondere unter Nutzung eines physikalischen Simulationsmodells, und die Winkel $\alpha_{ab}$ und $\alpha_{an}$ und optional die Winkel $\alpha_{ab2}$ und $\alpha_{an2}$ mittels der Simulation, insbesondere aus einem Simulationsergebnis, ermittelt werden.

9. Verfahren nach Anspruch 7 oder 8, **dadurch gekennzeichnet, dass** die Winkel $\alpha_{ab}$ und $\alpha_{an}$ und optional die Winkel $\alpha_{ab2}$ und $\alpha_{an2}$ auf Basis von Messergebnissen ermittelt werden, die im regulären Betrieb des Wechselrichters (1) aufgenommen werden oder wurden.

10. Verfahren nach einem der Ansprüche 7 bis 9, **dadurch gekennzeichnet, dass** die Winkel $\alpha_{ab}$ und $\alpha_{an}$ und optional die Winkel $\alpha_{ab2}$ und $\alpha_{an2}$ auf Basis von Messergebnissen ermittelt werden, die während einer Inbetriebnahme des Wechselrichters (1), wenn dieser an das Stromnetz (2) angeschlossen ist, aber die elektrische Maschine (3) noch nicht betrieben wird, aufgenommen werden oder wurden.

11. Wechselrichter (1), umfassend

   - einen Prozessor, und
   - eine Datenspeichervorrichtung, auf der computerausführbarer Programmcode gespeichert ist, der, wenn er von dem Prozessor ausgeführt wird, diesen veranlasst, die Schritte des Verfahrens nach einem der Ansprüche 1 bis 10 durchzuführen.

12. Computerprogramm, umfassend Befehle, die, wenn sie auf wenigstens einem Computer ausgeführt werden, den wenigstens einen Computer veranlassen, die Schritte des Verfahrens nach einem der Ansprüche 1 bis 10 durchzuführen.

13. Computerlesbares Medium, umfassend Befehle, die, wenn sie auf wenigstens einem Computer ausgeführt werden, den wenigstens einen Computer veranlassen, die Schritte des Verfahrens nach einem der Ansprüche 1 bis 10 durchzuführen.

FIG 1

FIG 2

FIG 3

# FIG 4

# FIG 5

FIG 6

FIG 7

FIG 8

Europäisches
Patentamt

European
Patent Office

Office européen
des brevets

**EUROPÄISCHER RECHERCHENBERICHT**

Nummer der Anmeldung

**EP 22 18 3346**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SIEMENS AG: "Vorzündung bei Gleichrichtern mit einer intelligenten Einspeisung", PRIOR ART PUBLISHING GMBH, PRIOR ART PUBLISHING GMBH, MANFRED-VON-RICHTHOFEN-STR. 9, 12101 BERLIN GERMANY, Bd. www.priorartregister.com, 14. Mai 2020 (2020-05-14), Seiten 1-14, XP007023195, | 1,7-13 | INV. H02M7/48 H02M5/458 H02M1/00 |
| Y | * Equations 6,7,15; Abbildungen 1,2,3,6 * ----- | 2-6 | |
| Y | EP 2 913 915 A1 (MITSUBISHI ELECTRIC CORP [JP]) 2. September 2015 (2015-09-02) * Absatz [0092]; Abbildungen 1,6,7 * ----- | 2-6 | |
| Y | DE 27 46 970 A1 (SIEMENS AG) 26. April 1979 (1979-04-26) * Seite 6, Zeilen 14-19; Abbildungen 1-3 * ----- | 2-6 | RECHERCHIERTE SACHGEBIETE (IPC) |
| Y | JP H09 163753 A (MEIDENSHA ELECTRIC MFG CO LTD) 20. Juni 1997 (1997-06-20) * Zusammenfassung; Abbildung 2 * ----- | 2-6 | H02M |

Der vorliegende Recherchenbericht wurde für alle Patentansprüche erstellt

| Recherchenort | Abschlußdatum der Recherche | Prüfer |
|---|---|---|
| Den Haag | 28. November 2022 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

   .........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 18 3346

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2022

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2913915 | A1 | 02-09-2015 | BR | 112015008116 | A2 | 04-07-2017 |
| | | | CN | 104737433 | A | 24-06-2015 |
| | | | EP | 2913915 | A1 | 02-09-2015 |
| | | | JP | 5683760 | B2 | 11-03-2015 |
| | | | JP | WO2014064996 | A1 | 08-09-2016 |
| | | | US | 2015236609 | A1 | 20-08-2015 |
| | | | WO | 2014064996 | A1 | 01-05-2014 |
| DE 2746970 | A1 | 26-04-1979 | DE | 2746970 | A1 | 26-04-1979 |
| | | | JP | S5471330 | A | 07-06-1979 |
| JP H09163753 | A | 20-06-1997 | JP | 3376787 | B2 | 10-02-2003 |
| | | | JP | H09163753 | A | 20-06-1997 |

EPO FORM P0461

Für nähere Einzelheiten zu diesem Anhang : siehe Amtsblatt des Europäischen Patentamts, Nr.12/82